Europäisches Patentamt

European Patent Office

Office européen des brevets

(11) Veröffentlichungsnummer: **0 435 073 A1**

# EUROPÄISCHE PATENTANMELDUNG

(21) Anmeldenummer: 90123913.7

(22) Anmeldetag: 12.12.90

(51) Int. Cl.5: **C07F 9/50**, C07F 9/53, B01J 31/24

Ein Antrag gemäss Regel 88 EPÜ auf Berichtigung der Seite 1 der Ansprüche liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 23.12.89 DE 3942791

(43) Veröffentlichungstag der Anmeldung:
03.07.91 Patentblatt 91/27

(84) Benannte Vertragsstaaten:
AT BE CH DE ES FR GB IT LI NL SE

(71) Anmelder: HOECHST AKTIENGESELLSCHAFT
Postfach 80 03 20
W-6230 Frankfurt am Main 80(DE)

(72) Erfinder: Konkol, Werner, Dr. Dipl.-Chem.
Lützowstrasse 40a
W-4200 Oberhausen 11(DE)
Erfinder: Bahrmann, Helmut, Dr. Dipl.-Chem.
Rohstrasse 48
W-4236 Hamminkeln(DE)
Erfinder: Herrmann, Wolfgang, Prof.Dr. Dipl.-Chem.
Waldweg 10
W-8051 Giggenhausen(DE)
Erfinder: Kulpe, Jürgen, Dr. Dipl.-Chem.
Inselsbergstrasse 9
W-6230 Frankfurt 80(DE)

(54) Sulfonierte Propylphenylphosphane, ihre Herstellung und Verwendung.

(57) Die Erfindung betrifft die chemischen Verbindungen n-Propyl(phenyl)(m-sulfophenyl)phosphan, $(n\text{-}C_3H_7)(C_6H_5)(C_6H_4\text{-}m\text{-}SO_3H)P$ , n-Propyldi(m-sulfophenyl)phosphan, $(n\text{-}C_3H_7)(C_6H_4\text{-}m\text{-}SO_3H)_2P$ , die Natriumsalze des n-Propyl(phenyl)(m-sulfophenyl)phosphans, $(n\text{-}C_3H_7)(C_6H_5)(C_6H_4\text{-}m\text{-}SO_3Na)P$ und des n-Propyldi(m-sulfophenyl)phosphans, $(n\text{-}C_3H_7)(C_6H_4\text{-}m\text{-}SO_3Na)_2P$ , sowie die Natriumsalze des n-Propyl(phenyl)(m-sulfophenyl)phosphanoxids, $(n\text{-}C_3H_7)(C_6H_5)(C_6H_4\text{-}m\text{-}SO_3Na)PO$ und des n-Propyldi(m-sulfophenyl)phosphanoxids, $(n\text{-}C_3H_7)(C_6H_4\text{-}m\text{-}SO_3\text{-}Na)_2PO$, ein Verfahren zur ihrer Herstellung und ihre Verwendung.

EP 0 435 073 A1

## SULFONIERTE PROPYLPHENYLPHOSPHANE, IHRE HERSTELLUNG UND VERWENDUNG

Die Erfindung betrifft neue sulfonierte Propylphenylphosphane, die Herstellung dieser Verbindungen und ihre Verwendung als Bestandteil von Katalysatorsystemen.

Die Herstellung von sulfonierten phenylphosphanen ist bekannt. So erhält man das Natriumsalz des m-Sulfophenyl-diphenylphosphans durch Umsetzung von Triphenylphosphan mit Oleum, Erwärmen des Reaktionsgemisches auf einem Wasserbad, Verdünnen des Umsetzungsproduktes mit Wasser und Neutralisieren mit Natriumhydroxid. Aus dem Gemisch kristallisiert dann die gewünschte Verbindung (J. Chem. Soc. l958, S. 281/282).

Nach ähnlichen Verfahren gewinnt man auch die Natriumsalze des Di(m-sulfophenyl)phenylphosphans und des Tri(m-sulfophenyl)phosphans. Einsatzstoff ist in beiden Fällen wiederum Triphenylphosphan, das mit Oleum bei Temperaturen zwischen 18 und 40 °C in einem Zeitraum von 15 bis 63 Stunden umgesetzt wird. Das Reaktionsprodukt wird ebenfalls mit Wasser verdünnt und mit Natriumhydroxid neutralisiert, wobei darauf zu achten ist, daß während der Zugabe des Natriumhydroxids im Gemisch Temperaturen unterhalb 20 °C eingehalten werden (DE-PS 26 27 354).

Durch Behandlung der Natriumsalze mit einem Kationenaustauscherharz erhält man die freien Säuren, die mit verschiedenen Basen zu anderen Salzen umgesetzt werden können. Auf diesem Wege lassen sich z.B. das Barium- und das Tetraethylammoniumsalz des Tri(m-sulfophenyl)phosphans darstellen (DE-PS 26 27 354).

Sulfonierte Arylphosphane werden u.a. als Komponenten von Katalysatorsystemen eingesetzt. Organische Phosphane, die außer sulfonierten Phenylresten auch noch Alkylreste in direkter Bindung an Phosphor enthalten, wurden bisher nicht beschrieben.

Die Erfindung betrifft Vertreter dieser neuen Stoffklasse, nämlich die Verbindungen n-Propyl(phenyl)(m-sulfophenyl)phosphan, $(n-C_3H_7)$ $(C_6H_5)$ $(C_6H_4-m-SO_3H)P$ , n-Propyldi(m-sulfophenyl)phosphan, $(n-C_3H_7)$ $(C_6H_4-m-SO_3H)_2P$ , die Natriumsalze des n-Propyl(phenyl)(m-sulfophenyl)phosphans, $(n-C_3H_7)$ $(C_6H_5)$ $(C_6H_4-m-SO_3Na)P$ und des n-Propyldi(m-sulfophenyl)phosphans, $(n-C_3H_7)$ $(C_6H_4-m-SO_3Na)_2P$ , sowie die Natriumsalze des n-Propyl(phenyl)(m-sulfophenyl)phosphanoxids, $(n-C_3H_7)(C_6H_5)(C_6H_4-m-SO_3Na)PO$ und des n-Propyldi(m-sulfophenyl)phosphanoxids, $(n-C_3H_7)(C_6H_4-m-SO_3-Na)_2PO$.

Weiterhin betrifft die Erfindung ein Verfahren zur Herstellung der neuen Verbindungen. Es ist dadurch gekennzeichnet, daß man Propyldiphenylphosphan mit Oleum bei Temperaturen unterhalb 10 °C sulfoniert, das Sulfonierungsprodukt hydrolysiert, mit Alkalicarbonat oder Alkalihydroxid neutralisiert, Alkalisulfat abtrennt, die wäßrige Lösung einengt, die sulfonierten Propylphenylphosphane aus dem trockenen Rückstand extrahiert, mono- und disulfoniertes Produkt durch Gelchromatographie trennt und gegebenenfalls die Salze des Mono- bzw. Disulfophenylphosphans durch Ionenaustausch in die freien Sulfonsäuren oder durch Oxidation in die entsprechenden Phosphanoxide überführt.

Das zur Herstellung der neuen Verbindungen benötigte Propyldiphenylphosphan erhält man aus Diphenylphosphan und Propylbromid in Gegenwart einer geeigneten Base, z.B. KOH (vgl. Tsvetkov et al., Synthesis 1986, S. 198 ff). Diphenylphosphan ist aus Chlordiphenylphosphan durch Umsetzung mit Lithiumaluminiumhydrid bei 0 °C und anschließende hydrolytische Aufarbeitung zugänglich (Kuchen et al., Chem. Ber. 91, 2871 (1958)).

Zur Einführung der Sulfonsäuregruppen in die Phenylreste behandelt man das Alkyldiarylphosphan mit überschüssigem Schwefeltrioxid in Form von Oleum als Sulfonierungsmittel. Es hat sich bewährt, Oleum einzusetzen, das 10 bis 65 und insbesondere 20 bis 30 Gew.-% "freies" Schwefeltrioxid enthält. Das Sulfonierungsmittel ist, bezogen auf die Phenylreste, im Überschuß anzuwenden. Zweckmäßig setzt man je mol Phenylrest 1 bis 200, vorzugsweise 3 bis 30 mol $SO_3$ ein. In der Praxis legt man das Oleum vor und fügt das Phosphan anteilsweise hinzu, um einen ständigen $SO_3$-Überschuß sicherzustellen.

Die Sulfonierung wird bei niedrigen Temperaturen, d.h. bei Temperaturen <15 °C, vorzugsweise bei 0 bis 8 °C durchgeführt. Es hat sich bewährt, den Reaktor gut zu kühlen und das Phosphan langsam und in kleinen Anteilen in das Oleum einzutragen, so daß die Reaktionswärme ohne Mühe abgeführt werden kann. Man erreicht dadurch, daß die Sulfonierung nicht unkontrolliert abläuft, sondern in einen oder in beide Phenylreste jeweils nur eine -$SO_3H$-Gruppe eintritt, und zwar hauptsächlich in meta-Position. Nach Zusatz des gesamten Phosphans kann die Nachreaktion bei Raumtemperatur und im wesentlichen ohne äußere Kühlung erfolgen. Es ist jedoch zweckmäßig, das Reaktionsgemisch zu rühren, um gegebenenfalls noch auftretende Reaktionswärme gleichmäßig zu verteilen und ohne Verzögerung abführen zu können. Entsprechend der niedrigen Temperatur sind längere Reaktionszeiten nötig. Im allgemeinen ist die Umsetzung in den genannten Temperaturbereichen nach 20 bis 100 Stunden, meist nach 40 bis 60 h beendet.

Im Anschluß an die Sulfonierung wird die Reaktionslösung mit Eiswasser verdünnt (hydrolysiert). Bei diesem Verfahrensschritt ist darauf zu achten, daß eine Temperatur von etwa 30 °C nicht überschritten wird, vorteilhaft ist es, Temperaturen im Bereich von 0 bis 10 °C einzuhalten. Die verdünnte, im wesentlichen das Sulfonierungsprodukt und Schwefelsäure enthaltende Lösung wird daraufhin neutralisiert. Geeignete alkalische Reagenzien sind die Alkalihydroxide und die Alkalicarbonate, vorteilhaft ist es, Natriumhydroxid einzusetzen. Um eine weitere Vergrößerung des Volumens des Reaktionsgemisches zu vermeiden und eine weitgehende Abscheidung des sich bildenden Alkalisulfats zu erreichen, wendet man das Neutralisationsmittel als hochkonzentrierte Lösung oder in ungelöster fester Form an, z.B. Ätznatron-Schuppen oder -Granalien.

Die Hauptmenge des Alkalisulfats entfernt man aus der Lösung aufgrund seiner geringeren Löslichkeit bei niederen Temperaturen durch Abkühlen. Die geeigneten Temperaturen sind abhängig von der Konzentration des Sulfats in der Lösung und seiner Löslichkeit in Abhängigkeit von der Temperatur. Die günstigsten Bedingungen sind daher von Fall zu Fall durch Versuche zu bestimmen. Die Sulfatabtrennung kann in einer oder auch in mehreren Stufen erfolgen, es hat sich als zweckmäßig erwiesen, die Kristallisation in zwei Stufen vorzunehmen.

Nach der Abscheidung des Alkalisulfats engt man die Lösung vorzugsweise im Vakuum einer Ölpumpe zur Trockne ein. Aus dem Kristallbrei extrahiert man die sulfonierten Propylphenylphosphane. Geeignete Extraktionsmittel sind Gemische aus niederen Alkoholen wie Methanol, Ethanol und Propanol mit Wasser. Bewährt hat sich als Extraktionsmittel z.B. eine Mischung aus 7 Volumenteilen Methanol und 5 Volumenteilen Wasser. Man führt die Extraktion nach konventionellen Ver fahren in einer oder in mehreren Stufen, vorzugsweise zwei bis vier Stufen durch. Die Extrakte werden vereinigt und zur Trockne eingeengt. Der Rückstand besteht im wesentlichen aus der monosulfonierten Verbindung $(n-C_3H_7)P(C_6H_5)(C_6H_4-m-SO_3Na)$ und der disulfonierten Verbindung $(n-C_3H_7)P(C_6H_4-m-SO_3Na)_2$.

Die Trennung des Gemisches sulfonierter Alkylarylphosphane erfolgt durch Gelchromatographie, ein Verfahren, das in der deutschen Patentanmeldung P 38 22 036.9 beschrieben ist. Als stationäre Feststoffphasen werden modifizierte, organische Polymere eingesetzt, insbesondere haben sich mit Epichlorhydrin vernetzte Dextrane (im Handel unter dem Namen Sephadex) und Oligoethylenglykol/-Glycidyldimethacrylat/-Pentaerithritoldimethacrylat-Copolymerisate (im Handel unter dem Namen Fractogel) bewährt. Als Flüssigphase dienen Wasser oder Wasser/Solvens-Gemische, wobei "Solvens" ein mit Wasser mischbares organisches Lösemittel ist, vorzugsweise Methanol und andere niedere Alkohole.

Durch Behandlung der Lösungen der Natriumsalze der sulfonierten Alkylarylphosphane mit einem Kationaustauscher in der $H^+$-Form können aus den Salzen die freien Säuren hergestellt und durch Einengen der wäßrigen Lösungen in Substanz gewonnen werden. Aus den Säuren lassen sich durch Umsetzung mit Hydroxiden, Carbonaten, Ammoniak oder Aminen weitere Salze der neuen sulfonierten Alkylarylphosphane herstellen.

Die neuen Verbindungen sind farblose, kristalline Substanzen. Die Natriumsalze enthalten je nach Trocknungsgrad bis zu ein Molekül Wasser pro Natrium-Ion. Eine vollständige Entwässerung ist durch mehrstündiges (3 bis 15 h) Erhitzen der Hydratformen in einem Hochvakuum auf 60 bis 100 °C, vorzugsweise 65 bis 80 °C, möglich. Der beanspruchte Schutz erstreckt sich daher sowohl auf die wasserhaltigen als auch auf die wasserfreien Verbindungen.

Die neuen Verbindungen haben sich als Komponenten von Katalysatorsystemen, insbesondere solchen, die Metalle der Gruppe VIII A des Periodensystems und wasserlösliche Phosphane enthalten, bewährt. Sie tragen zur Erhöhung der thermischen Beständigkeit solcher Systeme bei.

Im folgenden Beispiel wird die Herstellung der neuen Verbindungen beschrieben.

Beispiel

Sulfonierung von (n-Propyl)diphenylphosphan

In einem mit Innenthermometer und Tropftrichter ausgerüsteten 500 ml-Dreihalskolben werden bei 5 °C unter Temperaturkontrolle im Verlauf einer Stunde zu 290 ml Oleum ($SO_3$-Gehalt: 20 Gew.-%) 29.1 g (128 mmol) Propyldiphenylphosphan getropft. Der Ansatz wird im Eisbad gekühlt, so daß während der Phosphan-Zugabe die Innentemperatur 8 °C nicht übersteigt. Das Reaktionsgemisch wird zwei Tage bei Raumtemperatur gerührt, darauf zur Hydrolyse des überschüssigen Oleums auf 3 kg zerstoßenes Eis gegossen. Anschließend neutralisiert man mit 0,45 kg Natriumhydroxid in 1 1 Wasser, stellt dann die Lösung durch Zugabe von Schwefelsäure auf einen pH-Wert von etwa 7 ein und lagert sie drei Tage bei 6 °C. Daraufhin leitet man durch Rühren die Auskristallisation von Natriumsulfat ein, filtriert das Salz ab und wäscht es mit Eiswasser. Filtrat und Waschwasser werden im Vakuum einer Ölrotationspumpe über eine Kühlfalle eingeengt. Durch Gelchromatographie werden mono- und disulfoniertes Produkt voneinander getrennt. Am schnellsten läuft Natriumsulfat. Dann folgt das disulfonierte Produkt, bildet also die zweite Zone. Zuletzt läuft als 3. Zone das Mono sulfonierungsprodukt. Die Produktdetektion erfolgt durch UV/VIS-Spektroskopie oder refraktometrisch. Die Produkte werden im Vakuum einer Ölpumpe im Wasserbad (28 °C) 10 h getrocknet.

a) $(n\text{-}C_3H_7)P(C_6H_5)(C_6H_4\text{-}m\text{-}SO_3Na) \bullet H_2O$

Charakterisierung:

$^{31}P$-NMR   (109.3 MHz, $D_2O$, 5 °C): $\delta$ = -15.51 (s)

$^1H$-NMR   (270 MHz, $D_2O$, 28 °C): $\delta$ = 0.61 ppm (br, 3H), $\delta$ = 1.05 ppm (br, 2H)
$\delta$ = 1.66 ppm (br, 2H), $\delta$ = 6.96 - 7.72 ppm (m, 9H) - Abkürzung: br = breite Signalform.

Elementaranalyse: ($C_{15}H_{18}NaO_4PS$; 348.32)
Ber. C 51.72 H 5.21 O 18.37 P 8.89 S 9.19
Gef. C 52.96 H 5.09 O 18.10 P 9.06 S 9.02

b) $(n\text{-}C_3H_7)P(C_6H_4\text{-}m\text{-}SO_3Na)_2 \bullet 2 H_2O$

Charakterisierung:

$^{31}P$-NMR (109.3 MHz $D_2O$, 5 °C) : $\delta$ = 15.05 ppm (s)

Elementaranalyse: ($C_{15}H_{19}Na_2O_8PS_2$; 468.99)
Ber. C 38.42 H 4.08 O 27.29 P 6.60 S 13.67
Gef. C 38.30 H 4.11 O 27.91 P 6.53 S 14.20

Die beiden Propyldiarylphosphane können mit überschüssigem 30 %igem Wasserstoffperoxid in wäßriger Lösung quantitativ zu den entsprechenden Phosphanoxiden oxidiert werden, wenn man die Komponenten 5 Minuten auf etwa 80 °C erhitzt. Geht man von den reinen Propyldiarylphosphanen aus (siehe oben), dann ist eine weitere Reinigung der Phosphanoxide (z.B. durch Gelchromatographie, die prinzipiell möglich ist) nicht mehr erforderlich. Die Charakterisierung der Phosphanoxide erfolgt auf einfache Weise durch $^{31}P$-NMR-Spektroskopie in $D_2O$-Lösung bei 21 °C und 109.3 MHz Meßfrequenz:

$$(n\text{-}C_3H_7)(C_6H_5)(C_6H_4\text{-}m\text{-}SO_3Na)P{=}O \qquad = 41.58 \text{ ppm (Singulett)}$$
$$(n\text{-}C_3H_7)(C_6H_4\text{-}m\text{-}SO_3Na)_2P{=}O \qquad = 41.08 \text{ ppm (Singulett)}$$

Es handelt sich um farblose, luftbeständige, bis weit über 100 °C thermostabile Substanzen.

**Ansprüche**

1.  Die chemischen Verbindungen n-Propyl(phenyl)(m-sulfophenyl)phosphan, $(n\text{-}C_3H_7)(C_6H_5)(C_6H_4\text{-}m\text{-}SO_3H)P$, n-Propyldi(m-sulfophenyl)phosphan, $(n\text{-}C_3H_7)(C_6H_4\text{-}m\text{-}SO_3H)_2P$ , die Natriumsalze des n-Propyl(phenyl)(m-sulfophenyl)phosphans, $(n\text{-}C_3H_7)(C_6H_5)(C_6H_4\text{-}m\text{-}SO_3Na)P$ und des n-Propyldi(m-sulfophenyl)phosphans, $(n\text{-}C_3H_7)(C_6H_4\text{-}m\text{-}SO_3Na)_2P$ , sowie die Natriumsalze des n-Propyl(phenyl)(m-sulfophenyl)phosphanoxids, $(n\text{-}C_3H_7)(C_6H_5)(C_6H_4\text{-}m\text{-}SO_3Na)PO$ und des n-Propyldi(m-sulfophenyl)-phosphanoxids, $(n\text{-}C_3H_7)(C_6H_4\text{-}m\text{-}SO_3\text{-}Na)_2PO$ .

2.  Verfahren zur Herstellung der Verbindungen nach Anspruch 1 dadurch gekennzeichnet, daß man Propyldiphenylphosphan bei Temperaturen unterhalb 10 °C mit Oleum sulfoniert, das sulfonierte Produkt hydrolisiert, mit Alkalicarbonat oder Alkalihydroxid neutralisiert, Alkalisulfat abtrennt, die wäßrige Lösung einengt, die sulfonierten Propylphenylphosphane aus dem trockenen Rückstand extrahiert, mono- und disulfoniertes Produkt durch Gelchromatographie trennt und gegebenenfalls die Salze des Mono- bzw. Disulfophenylphosphans durch Ionenaustausch in die freien Sulfonsäuren oder durch Oxidation in die entsprechenden Phosphanoxide überführt.

3. Verfahren nach Anspruch 2, dadurch gekennzeichnet, daß man zur Sulfonierung Oleum einsetzt, das 10 bis 65, insbesondere 20 bis 30 Gew.-% freies Schwefeltrioxid enthält.

4. Verfahren nach Anspruch 2 oder 3, dadurch gekennzeichnet, daß man je mol Phenylrest 1 bis 200, vorzugsweise 3 bis 30 mol Schwefeltrioxid einsetzt.

5. Verfahren nach einem oder mehreren der Ansprüche 2 bis 4, dadurch gekennzeichnet, daß die Sulfonierung bei Temperaturen unterhalb 15° C, vorzugsweise 0 bis 8° C durchgeführt wird.

6. Verfahren nach einem oder mehreren der Ansprüche 2 bis 5, dadurch gekennzeichnet, daß die Hydrolyse des Sulfonierungsproduktes bei Temperaturen bis etwa 30° C, vorzugsweise im Bereich von 0 bis 10° C vorgenommen wird.

7. Verfahren nach einem oder mehreren der Ansprüche 2 bis 6, dadurch gekennzeichnet, daß die Extraktion der sulfonierten Propylphenylphosphane mit einem Gemisch aus niederen Alkoholen und Wasser erfolgt.

8. Verfahren nach Anspruch 7, dadurch gekennzeichnet, daß als Extraktionsmittel eine Mischung aus 7 Volumenteilen Methanol und 5 Volumenteilen Wasser eingesetzt wird.

9. Verwendung der Verbindungen nach Anspruch 1 als Komponente von Katalysatorsystemen.

Europäisches
Patentamt

EUROPÄISCHER
RECHERCHENBERICHT

Nummer der Anmeldung

EP 90 12 3913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 133 127 (RHONE-POULENC SANTE) <br> * Seiten 9-10; Beispiele 3-4; Ansprüche * <br> – – – | 1-7 | C 07 F 9/50 <br> C 07 F 9/53 <br> B 01 J 31/24 |
| X | JOURNAL OF CHROMATOGRAPHY, Band 408, 1987, Seiten 416-419, Elsevier Science Publishers B.V., Amsterdam, NL; L. LECOMTE et al.: "High-performance liquid chromatographic separation of sulphonated phosphines" <br> * Insgesamt * <br> – – – – – | 1-7 | |

RECHERCHIERTE
SACHGEBIETE (Int. Cl.5)

C 07 F 9/00

Der vorliegende Recherchenbericht wurde für alle Patentansprüche erstellt

| Recherchenort | Abschlußdatum der Recherche | Prüfer |
|---|---|---|
| Den Haag | 28 Januar 91 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument